# EUROPÄISCHE PATENTANMELDUNG

(11) **EP 3 581 601 A1**
(43) Veröffentlichungstag der Anmeldung: **18.12.2019**
(21) Anmeldenummer: 18177677.4
(22) Anmeldetag: 14.06.2018
(51) Int. Cl.: C08G 18/48, C08G 18/67, C08G 18/75, C08G 18/24, C08F 290/14, C08L 75/16

(54) **ZUSAMMENSETZUNGEN FÜR COMPOSITE-ANWENDUNGEN**

(71) Anmelder: Evonik Operations GmbH, 45128 Essen (DE)
(72) Erfinder: ORTELT, Martina, 74223 Flein (DE); TUNCAY, Zuhal, 44623 Herne (DE); PORTER, Maria, 48163 Münster (DE); BALTHASAR, Jaclyn, 21509 Glinde (DE); DE NARDO, Sebastian, 45899 Gelsenkirchen (DE)
(74) Vertreter: Evonik Patent Association

(57) **Zusammenfassung**

Gegenstand der Erfindung sind Zusammensetzungen bestehend aus mindestens einer NCO-Gruppenhaltigen Komponente a) in Kombination mit einer mit NCO-Gruppen reaktiven Komponente b) enthalten, wobei die Zusammensetzung geeignet ist als duroplastische Matrix zur Herstellung von Composite-Halbzeugen und ausgehärteten Composites, eingesetzt zu werden.

## Beschreibung

Die vorliegende Erfindung betrifft Zusammensetzungen, die mindestens eine NCO-Gruppen-haltigen Komponente a) in Kombination mit einer mit NCO-Gruppen reaktiven Komponente b) enthalten, wobei die Zusammensetzung geeignet ist als duroplastische Matrix zur Herstellung von Composite-Halbzeugen und ausgehärteten Composites, eingesetzt zu werden.

Unter Composites werden in diesem Zusammenhang Verbundwerkstoffe aus Fasern und einer Kunststoff- oder Harzmatrix verstanden. Solche Composites zeichnen sich durch eine hohe spezifische Steifigkeit und Festigkeit bei geringem Gewicht aus und rücken daher im Rahmen steigender Anforderungen an eine effiziente(re) Nutzung knapper Ressourcen immer stärker in den Blickpunkt verschiedener Industrien, z. B. der Automobilindustrie. Im Automobilbau werden neben hohen mechanischen Anforderungen insbesondere Anforderungen wie kurze Zykluszeiten (hohe Reaktivität), geringe chemische Schwindung bei Reaktion, kein Einsatz toxischer oder krebserzeugender Stoffe, Verzicht auf Lösemittel oder ein möglichst geringer Aufwand (keine zusätzlichen Prozessschritte) gestellt.

Als Verfahren zur Herstellung von Composites haben sich insbesondere das Nasspressverfahren und das RTM-Verfahren (Resin Transfer Moulding) etabliert. Dabei setzt man Matrixsysteme ein, die zunächst niedrigviskos sind und die Fasern gut benetzen können. Dazu wird üblicherweise eine Viskosität von < 400 mPa*s benötigt. Nach der Benetzung wird die Matrix in einer Form ausgehärtet. Übliche Härtungstemperaturen liegen zwischen 80 und 140°C. Für Anwendungen im Automobilbereich werden dabei Härtungszeiten von 15 Minuten oder weniger angestrebt. Zur Erzielung guter Oberflächen wird eine möglichst niedrige chemische Schwindung erwartet. Zudem sollten die Einsatzstoffe weder toxisch noch krebserregend sein.

Polyurethan-(Meth)Acrylat-Zusammensetzungen sind seit langem bekannt und werden in zahlreichen Anwendungsfeldern wie z. B. Beschichtungen (Coatings), Klebstoffen und Composites eingesetzt. Die Reaktionsprodukte aus Hydroxy-funktionellen Copolymeren und Isocyanaten zeigen Vorteile wie geringe Schwindung, geringe Exothermie und geringe Sauerstoffempfindlichkeit. Potentielle Anwendung sind Gießharze, Laminierharze oder lösemittelfreie Beschichtungen. In Beispielen werden zunächst die niedrigmolekularen Copolymere hergestellt, die in einem zweiten Schritt mit niedrigviskosen Isocyanaten umgesetzt werden. Nachteilig an der Zusammensetzung ist der Gebrauch von bereits polymerisierten (Meth)Acrylaten, die eine hohe Viskosität haben und somit nicht für die Verarbeitung im RTM-Verfahren geeignet sind. Zudem werden bevorzugt Diisocyanat-Monomere eingesetzt, die heutzutage als toxisch eingestuft sind oder in Verdacht stehen Krebs zu erzeugen.

US 4 062 826 beschreibt eine Zusammensetzung bestehend aus einem Urethan-Prepolymer und einem ungesättigten Polyester und Vinylmonomere, wobei aus der Zusammensetzung zunächst ein verformbarer Gegenstand erzeugt werden kann, der nachträglich in einen nicht verformbaren Gegenstand überführt werden kann. Die Zusammensetzung kann mit Glas- oder Carbonfasern verstärkt sein. Die Zusammensetzung erreicht Wärmeformbeständigkeiten bis max. 130 °C. Nachteilig an der Zusammensetzung ist, dass sie in mehreren Temperaturstufen (von RT bis 140 °C) gehärtet werden muss, um bei geringer Temperatur zunächst die Monomere zur Reaktion zu bringen, ohne sie zum Sieden zu bringen und anschließend die vollständige Aushärtung zu bewirken. Andernfalls wären Blasen die Folge. Dies führt zu langen Härtungszeiten.

WO 2008/119973 beschreibt eine Zusammensetzung aus einem Isocyanat, einem Hydroxy(meth)acrylat und einem Vinylmonomer. Als Isocyanat wird IPDI-Trimer eingesetzt. Es werden Wärmeformbeständigkeiten von bis zu 200 °C erreicht. Die Anwendung liegt im Composite-Bereich. Vor der Applikation wurden bereits Urethangruppen gebildet, die zu einer hohen Viskosität führen. Die finale Reaktion ist eine radikalische Polymerisation, die zu einer hohen chemischen Schwindung führt.

WO 2016/087366 beschreibt Zusammensetzungen aus MDI oder einem MDI-Prepolymer, einem Reaktivverdünner und mindestens einer Komponente, die sowohl Doppelbindungen als auch Hydroxylgruppen trägt. Nachteilig an den Zusammensetzungen sind die geringen Wärmeformbeständigkeiten, die bei max. 101 °C liegen.

Der vorliegenden Erfindung lag daher die Aufgabe zugrunde verbesserte Zusammensetzungen bereitzustellen, die zur Herstellung vom Composites im RTM- oder vergleichbaren Verfahren geeignet sind und dabei insbesondere eine ausreichend niedrige Anfangsviskosität aufweisen, nach der Faserimprägnierung möglichst schnell ohne Temperaturrampe und ohne Strahlung härten, eine möglichst geringe Schwindung und eine möglichst hohe End-Tg aufweisen.

Die Aufgabe konnte überraschend durch die erfindungsgemäße Zusammensetzung gemäß Anspruch 1 erfüllt werden. Bevorzugte Ausgestaltungen sind in den Unteransprüchen angegeben.

Erfindungsgemäß enthält die Zusammensetzung
a) 70 bis 90 Gew.-%, bevorzugt 74 bis 85 Gew.-% (bezogen auf die Gesamtzusammensetzung) einer NCO-Gruppen-haltigen reaktiven Komponente, umfassend
   a1) 60 bis 75 Gew.-%, bevorzugt 65 bis 72 Gew.-% (bezogen auf die Gesamtzusammensetzung der Komponente a)) mindestens einer Verbindung, die freie Isocyanatgruppen enthält;
   a2) 25 bis 40 Gew.-%, bevorzugt 28 bis 35 Gew.-% (bezogen auf die Gesamtzusammensetzung der Komponente a)) mindestens einer reaktiven Verbindung, die mindestens eine Doppelbindung enthält, bevorzugt Acrylate und Methacrylate; und
b) 10 bis 30 Gew.-%, bevorzugt 15 bis 26 Gew.-% (bezogen auf die Gesamtzusammensetzung) einer mit NCO-Gruppen reaktiven Komponente, umfassend
   b1) 10 bis 100 Gew.-%, bevorzugt 20 bis 100 Gew.-% (bezogen auf die Gesamtzusammensetzung der Komponente b)) mindestens einer Verbindung, die mindestens eine gegenüber Isocyanat-Gruppen reaktive funktionelle Gruppe aufweist;
   b2) 0 bis 90%, bevorzugt 0 bis 80 Gew.-% (bezogen auf die Gesamtzusammensetzung der Komponente b)) mindestens einer Verbindung, die mindestens eine Doppelbindung und mindestens eine gegenüber Isocyanat-Gruppen reaktive funktionelle Gruppen enthält.

Die erfindungsgemäße Zusammensetzung ist insbesondere eine 2K-Polyurethan-Zusammensetzung (auch 2K-PU-Zusammensetzung). Eine Härtung der Zusammensetzung gemäß der vorliegenden Erfindung ist innerhalb von 15 Minuten möglich.

Dabei kann das Verhältnis der NCO-Gruppen von der Komponente a1) zu der Summe der OH-, NH₂- und SH-Gruppen von den Komponenten b1) und b2) im Bereich von 2 : 1 bis 1 : 2, bevorzugt 1,5 : 1 bis 1 : 1 liegen.

In einer weiterhin bevorzugten Ausführungsform beträgt die Menge der radikalisch härtenden Komponenten a2) und b2) in Summe weniger als 50 Gew.-%, bevorzugt weniger als 40 Gew.-%, besonders bevorzugt maximal 30 Gew.-% bezogen auf die Gesamtzusammensetzung aus a) und b).

Die Viskosität von der Komponente a) beträgt in einer bevorzugten Ausführungsform weniger als 4000 mPa*s bei 23 bis 40 °C, bevorzugt weniger als 4000 mPa*s bei 23 °C, bevorzugt < 3000 mPa*s bei 23 °C.

Die Schwindung der Zusammensetzung beträgt nach der Härtung vorzugsweise weniger als 7 %, weiterhin bevorzugt weniger als 6 %, besonders bevorzugt weniger als 5 %.

Die Glasübergangstemperatur (Tg) der Zusammensetzung liegt nach der Härtung vorzugsweise oberhalb von 140 °C, besonders bevorzugt oberhalb von 160 °C.

Als Komponente a1) wird mindestens eine Verbindung, die freie Isocyanatgruppen enthält eingesetzt. Dies können insbesondere aromatische, aliphatische und/oder cycloaliphatische Di- und/oder Polyisocyanate sein. Es können auch Mischungen von verschiedenen Verbindungen als Komponente a1) eingesetzt werden.

Beispiele für Diisocyanate sind Cyclohexandiisocyanat, Methylcyclohexandiisocyanat, Ethylcyclohexandiisocyanat, Phenylendiisocyanat, Propylcyclohexandiisocyanat, Methyldiethylcyclohexandiisocyanat, Toluylendiisocyanat (TDI), Bis(isocyanatophenyl)methan (MDI), Propandiisocyanat, Butandiisocyanat, Pentandiisocyanat, Lysindiisocyanat, Hexandiisocyanat, wie Hexamethylendiisocyanat (HDI) oder 1,5-Diisocyanato-2-methylpentan (MPDI), Heptandiisocyanat, Octandiisocyanat, Nonandiisocyanat, wie 1,6-Diisocyanato-2,4,4-trimethylhexan oder 1,6-Diisocyanato-2,2,4-trimethylhexan (TMDI), Nonantriisocyanat, wie 4-Isocyanatomethyl-1,8-octandiisocyanat (TIN), Dekandi- und -triisocyanat, Undekandi- und -triisocyanat, Dodecandi- und-triisocyanate, Isophorondiisocyanat (IPDI), Methylendicyclohexyldiisocyanat (H₁₂MDI), Isocyanatomethylmethylcyclohexylisocyanat, 2,5(2,6)-Bis(isocyanato-methyl)bicyclo[2.2.1]heptan (NBDI), 1,3-Bis(isocyanatomethyl)cyclohexan (1,3-H₆-XDI), 1,3-Bis(isocyanatomethyl)benzol (m-XDI), oder 1,4-Bis(isocyanatomethyl)cyclohexan (1,4-H₆-XDI), allein oder in Mischung von zwei oder mehr davon.

Besonders geeignet sind Oligo- oder Polyisocyanate, die sich aus den genannten Di- oder Polyisocyanaten oder deren Mischungen durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen herstellen lassen. Von den Oligo- oder Polyisocyanaten sind Isocyanurate besonders geeignet.

Als Komponente a1) sind insbesondere MDI-, TDI-, H12MDI- oder IPDI-Homopolymere bevorzugt, besonders bevorzugt sind IPDI-Homopolymer (Isocyanurat-Typ).

Als Komponente a2) wird mindestens eine reaktiven Verbindung, die mindestens eine Doppelbindung enthält, eingesetzt. Bevorzugte Verbindungen sind Acrylate bzw. Methacrylate. Beispiele dafür sind Methylacrylat, Ethylacrylat, n-Propylacrylat, Isopropylacrylat, n-Butylacrylat, Isobutylacrylat, sec-Butylacrylat, tert-Butylacrylat, n-Pentylacrylat, n-Hexylacrylat, Cyclohexylacrylat, n-Heptylacrylat, n-Octylacrylat, 2-Ethylhexylacrylat, Nonylacrylat, n-Decylacrylat, iso-Decylacrylat, Dodecylacrylat, Laurylacrylat, Heptadecylacrylat, Dihydrodicyclopentadienylacrylat, Ethyldiglycolacrylat, Behenylacrylat, 2-Propylheptylacrylat, Isobornylacrylat, Phenylacrylat, Toluoylacrylat, Benzylacrylat, 2-Methoxyethylacrylat, 3-Methoxybutylacrylat, 2-Hydroxyethylacrylat, 2-Hydroxypropylacrylat, Stearylacrylat, Glycidylacrylat, Benzhydrylacrylat, 2-n-Butoxyethylacrylat, 2-Aminoethylacrylat, - (methacryloyloxypropyl)trimethoxysilan, 4-Chloroacrylat, Trifluoromethylmethylacrylat, 2-Trifluoromethylethylacrylat, 2-Perfluoroethylethylacrylat, 2-Perfluoroethyl-2-Perfluorobutylethylacrylat, 2-Perfluoroethylacrylat, Perfluoromethylacrylat, Diperfluoromethylmethylacrylat, 2-Perfluoromethyl-2-perfluoroethylethylacrylat, 2-Perfluorohexylethylacrylat, 2-Perfluorodecylethylacrylat and 2-Perfluorohexadecylethylacrylat, Methylmethacrylat, Ethylmethacrylat, n-Propylmethacrylat, Isopropylmethacrylat, n-Butylmethacrylat, Isobutylmethacrylat, sec-Butylmethacrylat, tert-Butylmethacrylat, n-Pentylmethacrylat, n-Hexylmethacrylat, Cyclohexylmethacrylat, n-Heptylmethacrylat, n-Octylmethacrylat, 2-Ethylhexylmethacrylat, Nonylmethacrylat, n-Decylmethacrylat, iso-Decylmethacrylat, Dodecylmethacrylat, Laurylmethacrylat, Heptadecylmethacrylat, Dihydrodicyclopentadienylmethacrylat, Ethyldiglycolmethacrylat, Behenylmethacrylat, 2-Propylheptylmethacrylat, Isobornylmethacrylat, Phenylmethacrylat, Toluoylmethacrylat, Benzylmethacrylat, 2-Methoxyethylmethacrylat, 3-Methoxybutylmethacrylat, 2-Hydroxyethylmethacrylat, 2-Hydroxypropylmethacrylat, Stearylmethacrylat, Glycidylmethacrylat, Benzhydrylmethacrylat, 2-n-Butoxyethylmethacrylat, 2-Aminoethylmethacrylat, 4-Chloromethylacrylat, Trifluoromethylmethylmethacrylat, 2-Trifluoromethylethylmethacrylat, 2-Perfluoroethylethylmethacrylat, 2-Perfluoroethyl-2-Perfluorobutylethylmethacrylat, 2-Perfluoroethylmethacrylat, Perfluoromethylmethacrylat, Diperfluoromethylmethylmethacrylat, 2-Perfluoromethyl-2-perfluoroethylethylmethacrylat, 2-Perfluorohexylethylmethacrylat, 2-Perfluorodecylethylmethacrylat and 2-Perfluorohexadecylethylmethacrylat. Diacrylate und Dimethacrylateauf Basis von Ethylenglycol, Triethylenglycol, Polyethylenglycol, Butandiol, Hexandiol und Glycerin. Kombinationen und Mischungen daraus sind ebenfalls möglich.

Von den vorgenannten Verbindungen sind Methacrylate als Komponente a2) besonders bevorzugt, insbesondere Methylmethacryalat, Isobornylmethacrylat und n-Butylmethacrylat.

Als Komponente b1) werden Verbindungen eingesetzt, die mindestens eine, bevorzugt mindestens zwei gegenüber Isocyanat-Gruppen reaktive funktionelle Gruppen aufweisen. Geeignete Verbindungen für b1) sind Verbindungen, die eine, bevorzugt zwei oder mehr OH-, NH₂-, NH-, SH- oder CH-acide Gruppen, bevorzugt Verbindungen, die eine, bevorzugt zwei oder mehr OH-, NH₂- und SH-Gruppen und besonders bevorzugt Verbindungen, die eine, bevorzugt zwei oder mehr OH-Gruppen aufweisen.

Als Verbindungen mit mindestens einer OH-Gruppe können insbesondere Diole und/oder Polyole, Diole und Polyole, die weitere funktionelle Gruppen aufweisen, OH-Gruppen haltige (Meth-)Acrylate und Poly(meth)acrylate oder Epoxidgruppen haltige Verbindungen, die zusätzlich mindestens eine OH-Gruppe aufweisen, eingesetzt werden.
Zu den Diolen unnd/oder Polyolen zählen insbesondere Ethylenglykol, 1,2- und 1,3-Propandiol, Diethylen-, Dipropylen-, Triethylen-, Tetraethylenglykol, 1,2- und 1,4-Butandiol, 1,3-Butylethylpropandiol, 1,3-Methylpropandiol, 1,5-Pentandiol, Bis-(1,4-hydroxymethyl)cyclohexan (Cyclohexandimethanol), Glycerin, Hexandiol, Neopentylglykol, Trimethylolethan, Trimethylolpropan, Pentaerythrit, Bisphenol A, B, C oder F, Norbornylenglykol, 1,4-Benzyldimethanol, -ethanol, 2,4-Dimethyl-2-ethylhexan-1,3-diol, 1,4- und 2,3-Butylenglykol, Di-β-hydroxyethylbutandiol, 1,5-Pentandiol, 1,6-Hexandiol, 1,8-Octandiol, Decandiol, Dodecandiol, Neopentylglykol, Cyclohexandiol, 3(4),8(9)-Bis(hydroxymethyl)-tricyclo[5.2.1.0^{2,6}]decan (Dicidol), 2,2-Bis-(4-hydroxycyclohexyl)propan, 2,2-Bis-[4-(β-hydroxyethoxy)-phenyl]propan, 2-Methyl-propandiol-1,3,2-Methylpentandiol-1,5, 2,2,4(2,4,4)-Trimethylhexandiol-1,6, Hexantriol-1,2,6, Butantriol-1,2,4, Tris-(β-hydroxyethyl)isocyanurat, Mannit, Sorbit, Polypropylenglykole, Polybutylenglykole, Xylylenglykol, Hydroxypivalinsäureneopentylglykolester, und Hydroxyacrylate, vorzugsweise 1,4-Butandiol, 1,2-Propandiol, Cyclohexandimethanol, Hexandiol, Neopentylglykol, Decandiol, Dodecandiol, Trimethylolpropan, Ethylenglykol, Triethylenglykol, 1,5-Pentandiol, 1,6-Hexandiol, 3-Methylpentandiol-1,5, Neopentylglykol, 2,2,4 (2,4,4)-Trimethylhexandiol und Hydroxypivalinsäureneopentylglykolester. Es können auch Mischungen von zwei oder mehr Verbindungen davon verwendet werden.

Diole und Polyole, die weitere funktionelle Gruppen aufweisen, sind insbesondere lineare oder schwach verzweigte hydroxylgruppenhaltigen Polyester (Polyesterpolyole), Polycarbonate, Polycaprolactone, Polyether (Polyetherpolyole), Polythioether, Polyesteramide, Polyacrylate, Polyvinylalkohole, Polyurethane oder Polyacetale, jeweils einzeln oder in Mischungen davon. Sie weisen vorzugsweise ein zahlenmittleres Molekulargewicht von 134 bis 20000 g/mol besonders bevorzugt 134 bis 4000 g/mol auf.

Bevorzugte Diole und Polyole, die weitere funktionelle Gruppen aufweisen sind Polyesterpolyole, Polyetherpolyole, Polyacrylate, Polyurethane, Polyvinylalkohole und/oder Polycarbonate, vorzugsweise mit einer OH-Zahl von 5 bis 900 mg KOH/Gramm bevorzugt. Besonders bevorzugt sind lineare oder schwach verzweigte Polyesterpolyole und Polyetherpolyole, vorzugsweise mit einer OH-Zahl von 5 bis 900 mg KOH/Gramm bevorzugt.

Die Polyesterpolyole können beispielsweise durch Umsetzung von Diolen mit unterschüssigen Mengen an Dicarbonsäuren, Dicarbonsäureanhydriden, Dicarbonsäureestern von niederen Alkoholen, Lactonen oder Hydroxycarbonsäuren hergestellt werden.

Zur Herstellung der Polyesterpolyole geeignete Diole und Polyole sind neben den oben genannten Diolen und/oder Polyolen auch 2-Methylpropandiol, 2,2-Dimethylpropandiol, Diethylenglykol, 1,12-Dodecandiol, 1,4-Cyclohexandimethanol und 1,2- und 1,4-Cyclohexandiol, für die Herstellung der Polyesterpolyole bevorzugte Diole und Polyole sind 1,4-Butandiol, 1,2-Propandiol, Cyclohexandimethanol, Hexandiol, Neopentylglykol, Decandiol, Dodecandiol, Trimethylolpropan, Ethylenglykol, Triethylenglykol, 1,5-Pentandiol, 1,6-Hexandiol, 3-Methylpentandiol-1,5, Neopentylglykol, 2,2,4(2,4,4)-Trimethylhexandiol sowie Hydroxypivalinsäureneopentylglykolester.

Zur Herstellung der Polyesterpolyole geeignete Dicarbonsäuren oder Derivate können aliphatischer, cycloaliphatischer, aromatischer und/oder heteroaromatischer Natur sein und gegebenenfalls, z. B. durch Halogenatome, substituiert sein und/oder ungesättigt sein. Zu den bevorzugten Dicarbonsäuren oder Derivaten zählen Bernstein-, Adipin-, Kork-, Azelain- und Sebacinsäure, 2,2,4 (2,4,4)-Trimethyladipinsäure, Phthalsäure, Phthalsäureanhydrid, Isophthalsäure, Terephthalsäure, Terephthalsäuredimethylester, Tetrahydrophthalsäure, Maleinsäure, Maleinsäureanhydrid und dimere Fettsäuren.

Die zur Herstellung der Polyesterpolyole verwendeten Diole und Dicarbonsäuren bzw. deren Derivate können in beliebigen Mischungen eingesetzt werden.

Die erfindungsgemäßen Polyesterpolyole lassen sich auch in bekannter Weise durch Ringöffnung aus Lactonen, wie Caprolacton, und einfachen Diolen als Startermolekül lassen. Auch Mono- und Polyester aus Lactonen, z. B. ε-Caprolacton oder Hydroxycarbonsäuren, z. B. Hydroxypivalinsäure, ε-Hydroxydecansäure, ε-Hydroxycapronsäure, Thioglykolsäure, können als Ausgangsstoffe für die Herstellung der Polyesterpolyole eingesetzt werden.

Die Polyesterpolyole können auch auf an sich bekannte Weise durch Kondensation in einer Inertgasatmosphäre bei Temperaturen von 100 bis 260 °C, vorzugsweise 130 bis 220 °C, in der Schmelze oder in azeotroper Fahrweise gewonnen werden.

Beispiele für geeignete Polyesterpolyole sind Polyesterpolyole aus den vorgenannten Dicarbonsäuren oder deren Derivaten und Polyphenolen, wie Hydrochinon, Bisphenol-A, 4,4'-Dihydroxybiphenyl oder Bis-(4-hydroxyphenyl)-sulfon; Polyester der Kohlensäure, die aus Hydrochinon, Diphenylolpropan, p-Xylylenglykol, Ethylenglykol, Butandiol oder Hexandiol-1,6 und anderen Polyolen durch übliche Kondensationsreaktionen, z. B. mit Phosgen oder Diethyl- bzw. Diphenylcarbonat, oder aus cyclischen Carbonaten, wie Glykolcarbonat oder Vinylidencarbonat, durch Polymerisation in bekannter Weise erhältlich sind; Polyesterpolyole der Kieselsäure, Polyesterpolyole der Phosphorsäure, z. B. aus Methan-, Ethan-, β-Chlorethan-, Benzol- oder Styrolphosphorsäure oder deren Derivate, wie z. B., Phosphorsäurechloride oder Phosphorsäureester und Polyalkoholen oder Polyphenolen der oben genannten Art; Polyesterpolyole der Borsäure; Polysiloxane, wie z. B. die durch Hydrolyse von Dialkyldichlorsilanen mit Wasser und nachfolgende Behandlung mit Polyalkoholen, die durch Anlagerung von Polysiloxandihydriden an Olefinen, wie Allylalkohol oder Acrylsäure, erhältlichen Produkte.

Bevorzugte lineare oder verzweigte Polyetherpolyole sind insbesondere Lupranol® 1000, 1100, 2032, 3402, 3300, 3422, 3423, 3424, 3504/1, 3505/1, Polyol 4800, 4640, 4525, 4360, Polytetramethylenetherglykole wie bspw. Terathane® 250, 650, 1000 und 2000, Voranol® CP 300, CP 450, CP 755, Caradol® ET 380-02, ET 570-02, Sovermol® 750, 760, 805, 810 und 815.

Die OH-Gruppen haltigen (Meth-)Acrylate und Poly(meth)acrylate werden insbesondere durch die CoPolymerisation von (Meth-)Acrylaten hergestellt, wobei einzelne Komponenten OH-Gruppen tragen andere hingegen nicht. So wird ein statistisch verteiltes OH-Gruppen haltiges Polymer erzeugt, welches eine oder mehr OH-Gruppen trägt.

Als Epoxidgruppen haltige Verbindungen, die zusätzlich mindestens eine OH-Gruppe aufweisen, insbesondere Epoxidharze in Frage. Zu den Epoxidharzen zählen z. B. Polyepoxide auf Basis von Bisphenol A-diglycidylether, Bisphenol F-diglycidylether oder cycloaliphatische Typen.

Vorzugsweise werden erfindungsgemäß Epoxidharze eingesetzt, ausgewählt aus der Gruppe umfassend Epoxidharze auf Basis von Bisphenol A-diglycidylether, Epoxidharze auf Basis von Bisphenol F-diglycidylether und cycloaliphatische Typen wie z. B. 3,4-Epoxycyclohexyl-epoxyethan oder 3,4-Epoxycyclohexylmethyl-3,4-epoxy-cyclohexancarboxylat wobei Bisphenol A basierte Epoxidharze und Bisphenol F basierte Epoxidharze oder Mischungen davon besonders bevorzugt sind.

Zu den Verbindungen, die mindestens eine SH-Gruppe aufweisen, zählen insbesondere Mercaptane, wie z. B. Glykoldimercaptoacetat, Pentaerythritoltetramercaptoacetat, Glykoldi(3-mercaptopropionat), Trimethylolpropantri(3-mercaptopropionat), Pentaerythritoltetra(3-mercaptopropionat), Dipentaerythritolhexa(3-mercaptopropionat), Ethoxyliertes-Trimethylolpropan-tri(3-mercaptopropionat), Ethoxyliertes-Trimethylolpropan-tri(3-mercaptopropionat), Tris[2-(3-mercaptopropionyloxy)ethyl]isocyanurat, Polycaprolacton tetra(3-mercaptopropionat).

Verbindungen, die mindestens eine NH₂- oder NH-Gruppe aufweisen, sind insbesondere Di- oder Polyamine oder Aminoalkohole. Die Di- oder Polyamine können monomere, oligomere und/oder polymere Verbindungen sein. Monomere und oligomere Verbindungen sind bevorzugt ausgewählt aus der Gruppe Diamine, Triamine, Tetramine, insbesondere aliphatische Amine, wie die Polyalkylenpolyamine, Diethylentriamin und Triethylentetramin, Trimethylhexamethylendiamin, 2-Methyl-pentandiamin, Oxyalkylenpolyamine, wie Polyoxypropylendiamin und Polyoxypropylentriamin (z. B., Jeffamine® D-230, Jeffamine® D-400, Jeffamine® T-403, Jeffamine® T-5000), 1,13-Diamino-4,7,10-trioxatridecan; 2,2,4- Trimethylhexamethylendiamin, 2,4,4-Trimethylhexamethylendiamin allein oder in Mischungen der Isomeren" cycloaliphatische Amine, wie Isophorondiamin (3,5,5-Trimethyl-3-aminomethyl-cyclohexylamin), 4,4'-Diaminodicyclohexylmethan, 2,4'-Diaminodicyclohexylmethan 2,2'-Diaminodicyclohexylmethan allein oder in Mischungen der Isomeren (PACM), 3,3'-Dimethyl-4,4'-diamino-dicyclohexylmethan, N-Cyclohexyl-1,3-propandiamin, 1,2-Diaminocyclohexan, Piperazin, N-Aminoethylpiperazin, TCD-Diamin(3(4), 8(9)-Bis(aminomethyl)-tricyclo[5.2.1.0^{2,6}]decan), araliphatische Amine, wie Xylylendiamine, aromatische Amine, wie Phenylendiamine und 4,4'-Diaminodiphenylmethan; Addukthärter, welches die Umsetzungsprodukte von Epoxidverbindungen, insbesondere Glycidylether des Bisphenol A und F, mit überschüssigem Amin sind; Polyamidoaminhärter, die durch Kondensation von Mono- und Polycarbonsäuren mit Polyaminen erhalten werden, insbesondere durch Kondensation von Dimerfettsäuren mit Polyalkylenpolyaminen, allein oder als Mischung aus zwei oder mehr davon.

Als Aminoalkohole seien beispielhaft Monoethanolamin, 3-Amino-1-propanol, Isopropanolamin, Aminoethoxyethanol, N-(2-Aminoethyl)ethanolamin, N-Ethylethanolamin, N-Butylethanolamin, Diethanolamin, 3-(Hydroxyethylamino)-1-propanol und Diisopropanolamin, allein oder als Mischungen, genannt.

Als Verbindungen mit mindestens einer CH-aciden Gruppe können beispielsweise Derivate von Malonsäureestern, Acetylaceton und/oder Acetessigester eingesetzt werden.

Es können beliebige Kombinationen der oben genannten Verbindungen als b1) eingesetzt werden, insbesondere Mischungen aus zwei oder mehr der genannten Verbindungen, die eine, bevorzugt zwei OH-, NH₂-, NH-, SH- oder CH-acide Gruppen, aufweisen können eingesetzt werden.

Als Verbindung b1) sind besonders bevorzugt die vorgenannten linearen oder schwach verzweigten Polyesterpolyole und Polyetherpolyole, vorzugsweise mit einer OH-Zahl von 5 bis 900 mg KOH/Gramm.

Die Verbindungen b2) ist eine Verbindung, die mindestens eine Doppelbindung und mindestens eine gegenüber Isocyanat-Gruppen reaktive funktionelle Gruppen enthält. Bevorzugt sind olefinische Verbindungen, die sowohl mindestens eine Doppelbindung, als auch eine Hydroxylgruppe tragen. Weitere Bestandteile können aliphatische, cycloaliphatische, aromatische oder heterocyclische Alkylgruppen sein. Auch Oligomere oder Polymere sind denkbar. Bevorzugt sind Hydroxy-funktionelle Acrylate oder Methacrylate, insbesondere Hydroxyethylacrylat, Hydroxypropylacrylat, Hydroxybutylacrylat und Hydroxyethylmethacrylat, Hydroxypropylmethacrylat, Hydroxybutylmethacrylat, Glycerindiacrylat, Pentaerythrolthacrylat, Trimethylolpropandiacrylat, Glycerindimethacrylat, Pentaerythroltrimethacrylat und Trimethylolpropandimethacrylat sowie Hydroxyethylvinylether, Hydroxypropylvinylether, Hydroxybutylvinylether Hydroxypentylvinylether und Hydroxyhexylvinylether. Besonders bevorzugt sind Hydroxyethylmethacrylat und Hydroxypropylmethacrylat. Auch Mischungen der vorgenannten Verbindungen eingesetzt werden.

Die erfindungsgemäße Zusammensetzung umfasst in einer bevorzugten Ausführungsform mindestens einen Polyurethan-Katalysator als Komponente c). Geeignete Komponenten c) sind Verbindungen, die katalytisch auf die Reaktion zwischen Isocyanat- und Hydroxylgruppen wirken. Der Katalysator c) kann in der erfindungsgemäßen Zusammensetzung insbesondere in einer Menge von 0,005 bis 1 Gew.-% vorhanden sein. Die Menge des Katalysators richtet sich dabei nach der Katalysatoraktivität, d. h. je aktiver der Katalysator ist, desto geringer muss die einzusetzende Katalysatormenge sein.

Darunter fallen zum Beispiel Zinnverbindungen wie Dioctylzinndi(2-hexylhexanoat), Dioctylzinndithioglycolat, Dioctylzinndilaurat (DOTL), Dibutylzinndilaurat (DBTL), 220 Monobutylzinntris-(2-ethylhexanoat), Dioctylzinndiketanoat, Dibutylzinndiketanoat, Dioctylzinndiacetat (DOTA), Dioctylzinnoxid (DOTO), Dibutylzinndiacetat (DBTA), Dibutylzinnoxid (DBTO), Monobutylzinndihydroxychlorid, Monobutylzinnoxid (MBTO), Dioctylzinndicarboxylat und Dioctylzinncarboxylat und Zinkverbindungen wie Zinkneodecanoat, Zinkoctoat, Zinkacetylacetonat, Zinkoxalat, Zinkacetat.

Des Weiteren sind Bismuth-Komplexverbindungen bekannt, die eine katalytische Wirkung auf die Reaktion zwischen Isocyanat- und Hydroxylgruppen haben. Geeignete Liganden für Bismuth-Komplexverbindungen sind Alkoholate, insbesondere Methanolat, Ethanolat, Propanolat, Isopropanolat, Butanolat, tert.-Butanolat, Pentanolat, Neopentanolat, Hexanolat und Octanolat; Carboxylate, insbesondere Formiat, Acetat, Propionoat, Butanoat, Isobutanoat, Pentanoat, Neopentanoat, Hexanoat, Cyclohexanoat, Heptanoat, Octanoat, 2-Ethylhexanoat, Nonanoat, Decanoat, Neodecanoat, Undecanoat, Dodecanoat, Lactat, Oleat, Citrat, Benzoat, Salicylat und Phenylacetat; 1,3-Diketonate, insbesondere Acetylacetonat (2,4-Pentandionat), 2,2,6,6-Tetramethyl-3,5-hepandionat, 1,3-Diphenyl-1,3-propandionat (Dibenzoylmethanat), 1-Phenyl-1,3-butandionat und 2-Acetylcyclohexanonat; Oxinat; 1,3-Ketoesterate, insbesondere Methylacetoacetat, Ethylacetoacetat, Ethyl-2-methylacetoacetat, Ethyl-2-ethylacetoacetat, Ethyl-2-hexylacetoacetat, etyhl-2-phenylacetoacetat, Propylacetoacetat, Isopropylacetoacetat, Butylacetoacetat, tert.Butylacetoacetat, Ethyl-3-oxo-valerat, Ethyl-3-oxo-hexanoat und 2-Oxo-cyclohexancarbonsäure-ethylesterat; 1,3-Ketoamidate, insbesondere N,N-Diethyl-3-oxo-butanamidat, N,N-Dibutyl-3-oxo-butanamidat, N,N-Bis(2-ethylhexyl)-3-oxo-butanamidat, N,N-Bis(2-methoxyethyl)-3-oxo-butanamidat, N,N-Dibutyl-3-oxo-heptanamidat, N,N-Bis(2-methoxyethyl)-3-oxo-heptanamidat, N,N-Bis(2-ethylhexyl)-2-oxo-cyclopentancarboxamidat, N,N-Dibutyl-3-oxo-3-phenylpropanamidat, N,N-Bis(2-methoxyethyl)-3-oxo-3-phenylpropanamidat; und N-Polyoxyalkylen-1,3-ketoamidate wie insbesondere Acetoamidate von Polyoxyalkylenaminen mit ein, zwei oder drei Aminogruppen.

Weitere mögliche Polyurethan-Katalysator als Komponente c) sind zudem Titan-Komplexverbindungen. Geeignete Liganden für Titan-Komplexverbindungen sind Alkyl-Gruppen, insbesondere Methyl, Ethyl, Propyl, Butyl, Pentyl, Hexyl, Heptyl, Octyl, Nonyl, Decyl, Stearyl, iso-Stearyl; Alkoholate, insbesondere Methanolat, Ethanolat, Propanolat, Isopropanolat, Butanolat, tert. Butanolat, Pentanolat, Neopentanolat, Hexanolat, Octanolat, 1-Naphtolat, Phenolat, Propylphenolat, 4-Dodecylphenolat, Chinolinolat, Diethylenglykolat, Pentandiolat, Hexandiolat und 2-Ethyl-1,3-Hexanediolat; Carboxylate, insbesondere Formiat, Acetat, Propionoat, Butanoat, Isobutanoat, Pentanoat, Neopentanoat, Hexanoat, Cyclohexanoat, Heptanoat, Octanoat, 2-Ethylhexanoat, Nonanoat, Decanoat, Neodecanoat, Undecanoat, Dodecanoat, Stearat, Lactat, Oleat, Citrat, Benzoat, Salicylat, Phenylacetat und Hyroxyhexanoat; 1,3-Diketonate, insbesondere Acetylacetonat (2,4-Pentandionat), 2,2,6,6-Tetramethyl-3,5-heptandionat, 1,3-Diphenyl-1,3-propandionat (Dibenzoylmethanat), 1-Phenyl-1,3-butandionat und 2-Acetylcyclohexanonat; Oxinat; und 1,3-Ketoesterate, insbesondere Methylacetoacetat, Ethylacetoacetat, Ethyl-2-methylacetoacetat, Ethyl-2-ethylacetoacetat, Ethyl-2-hexylacetoacetat, etyhl-2-phenylacetoacetat, Propylacetoacetat, Isopropylacetoacetat, Butylacetoacetat, tert.-Butylacetoacetat, Ethyl-3-oxo-valerat, Ethyl-3-oxo-hexanoat und 2-Oxo-cyclohexancarbonsäure-ethylesterat.

Es sind auch andere Metallverbindungen wie Kaliumoctoat/DEG, Kupferoleat, Kupfernaphtenat, Ceroctoat, Eisenacetylacetonat, Zirconiumoctoat als Polyurethankatalysatoren denkbar.

Bevorzugte Polyurethankatalysatoren sind Zinn-, Bismuth- und Titankatalysatoren. Besonders bevorzugt sind Dibutylzinndilaurat, Bismuth-Neodecanoat und Tetrakis(2-ethylhexan-1 ,3-diolato)titanat.

Die erfindungsgemäße Zusammensetzung umfasst in einer bevorzugten Ausführungsform mindestens einen Initiator als Komponente d). Geeignete Komponenten d) sind alle Verbindungen, die eine Polymerisation starten können. Der Initiator kann in der Zusammensetzung in einer Menge im Bereich von 0,1 bis 10 Gew.-%, bevorzugt 0,5 bis 6 Gew.-% bezogen auf die Gesamtzusammensetzung vorhanden sein.

Als Polymerisationsinitiatoren können insbesondere Peroxide oder Azoverbindungen dienen. Unter Umständen kann es vorteilhaft sein, ein Gemisch verschiedener Initiatoren einzusetzen. Vorzugsweise finden halogenfreie Peroxide wie Permaleinate, Dilauroylperoxid, Dibenzoylperoxid, tert-Butylperoctoat, Di(tert-butyl)peroxid (DTBP), Di(4-tert-butylcyclohexyl)peroxydicarbonat (BCHPC), Di(tert-amyl)peroxid (DTAP), tert-Butylperoxy-(2-ethylhexyl)carbonat (TBPEHC) und weitere bei hoher Temperatur zerfallende Peroxide als Radikalinitiator Verwendung. Besonders bevorzugte Initiatoren sind Dilauroylperoxid oder Dibenzoylperoxid.

Eine weitere Ausführungsform für die Initiator enthaltende erfindungsgemäße Zusammensetzung ist die Kombination aus Inititator, insbesondere Peroxiden, und Beschleunigern, insbesondere Aminen. Als besagte Amine seien zum Beispiel tertiäre aromatisch substituierte Amine, wie insbesondere N,N-Dimethyl-p-toluidin, N,N-bis-(2-Hydroxyethyl)-p-toluidin oder N,N-bis-(2-Hydroxypropyl)-p-toluidin genannt. Die erfindungsgemäße Zusammensetzung kann bis zu 7 Gew.-%, bevorzugt bis zu 5 Gew.-% und besonders bevorzugt bis zu 3 Gew.-% eines Beschleunigers enthalten.

Die erfindungsgemäßen Zusammensetzungen können weitere Zusatzstoffe als Komponente e) enthalten. Diese werden vorzugsweise ganz oder teilweise der Polyolkomponente zugemischt. Darunter werden Stoffe verstanden, die in der Regel zugesetzt werden, um die Eigenschaften des Polyurethans in gewünschter Richtung zu verändern, z. B. Viskosität, Benetzungsverhalten, Stabilität, Reaktionsgeschwindigkeit, Blasenbildung, Lagerfähigkeit oder Haftung, oder auch um die Gebrauchseigenschaften dem Anwendungszweck anzupassen. Beispiele für Zusatzstoffe sind Verlaufsmittel, Trennmittel, Reaktionsverzögerer, Thixotropiermittel, Alterungsschutzmittel, Farbstoffe, Trockenmittel, Harze und/oder Netzmittel.

Als Reaktionsverzögerer im Sinn dieser Erfindung werden Substanzen verstanden, die die Reaktion zwischen OH- und NCO-Gruppen verlangsamen. Dazu sind sauer wirkende Verbindungen geeignet, beispielsweise organische oder anorganische Carbonsäuren, Säurechloride, saure anorganische Salze oder andere saure organische Verbindungen. Diese können in Mengen von 0,05 bis 3,0 Gew.-% zugegeben werden.

Erfindungsgemäß als Reaktionsverzögerer zu verwendende organische Säuren sind solche, die beispielsweise einen pKs im Bereich zwischen 2,8 und 4,5 aufweisen, wie Phthalsäure, Isophthalsäure, Terephthalsäure, Ascorbinsäure, Benzoesäure, o-Hydroxy-benzoesäure, p-Hydroxybenzoesäure, 2,3-Dihydroxybenzoesäure, 2,4-Dihydroxybenzoesäure, 3,4-Dihydroxybenzoesäure, Salicylsäure, Adipinsäure, Bersteinsäure, Apfelsäure, Acetylsalicylsäure, Alanin, β-Alanin, 4-Aminobuttersäure, Glycin, Milchsäure, Sarkosin oder Serin. Es können aber auch Ameisensäure, Essigsäure, Monochlor- oder Dichloressigsäure, 2,4- oder 2,6-Dichlorphenylessigsäure, Phosphorsäure, Hydrogenphosphate, polymere Kationentauscher mit Carboxygruppen oder mit Orthophosphatgruppen, Lithiumchlorid, 4-Toluylensulfonylisocyanat oder Säurechloride der oben erwähnten Carbonsäuren eingesetzt werden. Es können dabei die vorgenannten Verbindungen sowohl einzeln als auch Mischungen als Zusatzstoffe verwendet werden.

Weitere Zusatzstoffe können Stabilisatoren sein. Als Stabilisatoren im Sinne dieser Erfindung sind Antioxidantien, UV-Stabilisatoren oder Hydrolyse-Stabilisatoren zu verstehen. Beispiele hierfür sind die handelsüblichen sterisch gehinderten Phenole und/oder Thioether und/oder substituierten Benzotriazole und/oder Amine vom "HALS"-Typ (Hindered Amine Light Stabilizer).
Weitere Zusatzstoffe für die erfindungsgemäße Zusammensetzung können Weichmacher, Farbpaste, Molekularsiebe, Pigmente oder Füllstoffe sein. Es können auch Trockenmittel eingesetzt werden, die während der Lagerung Feuchtigkeit abfangen.

Die Zusatzstoffe sollten so ausgewählt werden, dass sie keine Reaktionen oder Nebenreaktionen mit den Isocyanaten eingehen, zumindest während der Vernetzungsreaktion.

Die vorliegende Erfindung betrifft zudem ein Verfahren zur Herstellung von Composite-Formteils, wobei das Verfahren die folgenden Schritte umfasst:
a) Herstellung der vorgenannten erfindungsgemäßen Zusammensetzung;
b) Direkte Imprägnierung eines faserförmigen Trägermaterials mit der in Schritt a) hergestellten Zusammensetzung;
c) Formgebung des mit der Zusammensetzung imprägnierten faserförmigen Trägers zu einem Formteil (nicht ausgehärtet);
d) Aushärten der Zusammensetzung zur Herstellung des fertigen Composite-Formteils.

Das bevorzugt im erfindungsgemäßen Verfahren verwendete faserförmige Trägermaterial zur Herstellung des Composite-Halbzeug besteht aus Glas, Kohlenstoff, Kunststoffen wie Polyamid (Aramid) oder Polyester, Naturfasern, oder mineralischen Fasermaterialien wie Basaltfasern oder keramische Fasern (Fasern auf Basis von Aluminiumoxiden und/oder Siliciumoxiden). Die verschiedenen Trägermaterialien können aus einzelnen der genannten Fasertypen, aus Mischungen von verschiedenen der genannten Fasertypen, oder aus mehreren Lagen verschiedener der genannten Fasertypen bestehen.

Die faserförmigen Träger können als textile Flächengebilde aus Vlies, Maschenware, Gewirke oder Gestricke, nicht maschige Gebinde wie Gewebe, Gelege oder Geflechte, als Langfaser- oder als Kurzfasermaterialien vorliegen. Auch Mischungen von Fasertypen, wie z. B. Gewebe-Kombinationen aus Aramid- und Glasfasern, oder Kohlenstoff und Glasfasern, können verwendet werden. Ebenso sind Hybrid-Composite-Bauteile mit Prepregs aus unterschiedlichen faserförmigen Trägern geeignet.

Glasfasern sind hauptsächlich wegen ihres relativ geringen Preises die am häufigsten verwendeten Fasertypen. Prinzipiell sind hier alle Arten von glasbasierenden Verstärkungsfasern geeignet (E-Glas-, S-Glas-, R-Glas-, M-Glas-, C-Glas-, ECR-Glas-, D-Glas-, AR-Glas-, oder Hohlglasfasern).

Kohlenstofffasern kommen im Allgemeinen in Hochleistungsverbundstoffen zum Einsatz, wo auch die im Verhältnis zur Glasfaser niedrigere Dichte bei gleichzeitig hoher Festigkeit ein wichtiger Faktor ist. Kohlenstofffasern (auch Carbonfasern) sind industriell hergestellte Fasern aus kohlenstoffhaltigen Ausgangsmaterialien, die durch Pyrolyse in graphitartig angeordneten Kohlenstoff umgewandelt werden. Man unterscheidet isotrope und anisotrope Typen: isotrope Fasern besitzen nur geringe Festigkeiten und geringere technische Bedeutung, anisotrope Fasern zeigen hohe Festigkeiten und Steifigkeiten bei gleichzeitig geringer Bruchdehnung.

Als Naturfasern werden hier alle Textilfasern und Faserwerkstoffe bezeichnet, die aus pflanzlichem und tierischem Material gewonnen werden (z. B. Holz-, Zellulose-, Baumwoll-, Leinen-, Hanf-, Jute-, Sisal- oder Bambusfasern).

Aramid-Fasem weisen, ähnlich wie auch Kohlenstofffasern, einen negativen Wärmeausdehnungskoeffizienten auf, werden also bei Erwärmung kürzer. Ihre spezifische Festigkeit und ihr Elastizitätsmodul sind deutlich niedriger als jene von Kohlenstofffasern. In Verbindung mit dem positiven Ausdehnungskoeffizienten des Matrixharzes lassen sich hoch maßhaltige Bauteile fertigen. Gegenüber Kohlenstofffaser verstärkten Kunststoffen ist die Druckfestigkeit von Aramidfaser-Verbundwerkstoffen deutlich geringer. Bekannte Markennamen für Aramidfasern sind Nomex®, Kevlar®, Teijnconex®, Twaron® und Technora®.

Für das erfindungsgemäße Verfahren sind insbesondere Trägermaterialien aus Glasfasern, Kohlenstofffasern, Aramid-Fasern oder keramischen Fasern bevorzugt. Bei dem faserförmigen Trägermaterial handelt es sich vorzugsweise um ein textiles Flächengebilde. Geeignet sind textile Flächengebilde aus Vlies, ebenso sogenannte Maschenware, wie Gewirke und Gestricke, aber auch nicht maschige Gebinde wie Gewebe, Gelege oder Geflechte. Ebenfalls erfindungsgemäß geeignet sind Rovings und Garne.

Eine besonders bevorzugte Ausführungsform der vorliegenden Erfindung, die Herstellung von RTM-Composite-Platten soll nachfolgend beispielhaft, aber nicht einschränkend beschrieben werden.

Zur Herstellung der erfindungsgemäßen Zusammensetzung wird zunächst die Polyolkomponente hergestellt. Dazu können die Komponenten b1) und b2), sofern vorhanden, gemischt werden. Feste Bestandteile sind ggf. in der Mischung zu lösen. Das kann auch durch Erwärmen unterstützt werden. Anschließend werden die Zusatzstoffe e) und Katalysatoren c) zugemischt und dispergiert. Alle Komponenten sollten möglichst wasserfrei sein. Die Isocyanat-Komponente a) wird hergestellt, indem die Komponente a2) vorgelegt und die Komponente a1) in ihr gelöst wird. Dies kann mehrere Stunden dauern und wird durch Erwärmen auf ca. 60 °C unterstützt.

Kurz vor der Applikation wird der Polyolkomponente der Initiator d) zugegeben. Zur Anwendung werden die Polyol- und die Isocyanat-Komponente in an sich bekannter Weise miteinander gemischt. Dazu können gängige Mischaggregate verwendet werden, die dem Fachmann allgemein bekannt sind. Nach Mischen der Komponenten wird das Gemisch über einen Schlauch in eine Form überführt.

Um eine erfindungsgemäße Anwendung zu ermöglichen, weist die erfindungsgemäße Zusammensetzung eine Viskosität in gemischter Form von 30 bis 2000 mPa*s auf, gemessen bei einer Temperatur zwischen 23 und 60 °C. Insbesondere sollte die Viskosität 100 bis 1500 mPa*s betragen und vorzugsweise unter 400 mPa*s gemessen bei 40 bis 60°C. Die Viskosität sollte unmittelbar nach dem Mischen bestimmt werden, durch die einsetzende Vernetzungsreaktion nimmt sie langsam zu. Die Zusammensetzung weist außerdem eine Glasübergangstemperatur (Tg) oberhalb von 120 °C auf, insbesondere oberhalb von 140 °C.

Die Herstellung von RTM-Composite-Platten, kann wie folgt durchgeführt werden: Wie oben beschrieben werden die Polyol- und Isocyanatkomponente hergestellt. Die Komponenten werden zunächst einzeln vermischt und ggf. entgast und anschließend zur beschriebenen Zusammensetzung gemischt. In der Zwischenzeit wird das faserförmige Trägermaterial in eine RTM-Form eingelegt, die Form verschlossen und auf 100 °C erwärmt. Die flüssige Polyurethan-Zusammensetzung wird in einem Drucktopf platziert und dieser wird geschlossen. Dann wird Druck angelegt und die flüssige Zusammensetzung wird aus dem Drucktopf, über ein Schlauchsystem in die RTM-Form gedrückt. Die flüssige Zusammensetzung füllt die Form, durchtränkt dabei die Fasern und verlässt die Form dann wieder über einem freien Schlauch. Sobald flüssiges Material die Form verlässt, wird die "Infusion" gestoppt und der Drucktopf gereinigt. Das in der beheizten Form verbliebene Material härtet über die Zeit aus und kann nach spätestens 15 Minuten als Composite-Platte entnommen werden.

Gegenstand der Erfindung ist auch die Verwendung der Composites, insbesondere mit faserförmigen Trägern aus Glas-, Kohle- oder Aramid-Fasern.

Gegenstand der Erfindung ist insbesondere auch die Verwendung der erfindungsgemäß hergestellten Composite-Formteile im Boots- und Schiffbau, in der Luft- und Raumfahrtechnik, im Automobilbau, für Zweiräder, bevorzugt Motorräder und Fahrräder, in den Bereichen Automotive, Construction, Medizintechnik, Sport, Elektro- und Elektronik-Industrie, Energieerzeugungsanlagen, z. B. für Rotorblätter bei Windkraftanlagen.

### Beispiele

### Folgende Methoden wurden zur Charakterisierung eingesetzt:

DSC (Differential Scanning Calorimetry): Mettler Toledo, Temperaturbereich: -30-250 °C; Heizrate: 10K/min; 2 Runs um Tg₁ und Tg_{,max} zu bestimmen. Durchführung nach DIN EN ISO 11357-2 (Stand Juli 2014).

Viskositätsmessung am Zylinderviskosimeter: Rheotec RC30; Isotherm bei 23 °C; DIN EN ISO 3219 (Stand Okt. 1994).

Viskositätsmessung am Rheometer: Anton-Paar MCR 301, Kegel-Platte; Isotherm bei 60 °C, Amplitude Gamma 2%, Frequenz 1Hz; DIN EN ISO 3219 (Stand Okt. 1994).

Schwindungsbestimmung: Bestimmung der Gesamtvolumenschwindung nach DIN EN ISO 3521 (Stand Okt. 1999) aus den Dichten der Polyurethansysteme vor und nach Härtung.

**Tab.1: Erklärung zu Handelsnamen der in den Beispielen eingesetzten Stoffe**

| **Handelsname** | **Chemische Bezeichnung** | **Lieferant** |
|---|---|---|
| Vestanat® T1890/100 | Isophorondiisocyanat-Homopolymer (Isocyanurattyp), CAS-Nr. 53880-05-0 | Evonik Resource Efficiency GmbH |
| Lupranol® 3504/1 | 1,1,1-Trimethylolpropan, propoxyliert, CAS-Nr. 25723-16-4 | BASF Polyurethanes GmbH |
| Lupranol® 3300 | Glycerol, propoxyliert, CAS-Nr. 25791-96-2 | BASF Polyurethanes GmbH Postfach |
| Visiomer® n-BMA | n-Butylmethacrylat, CAS-Nr. 97-88-1 | Evonik Performance Materials GmbH AG |
| Visiomer® MMA | Methylmethacrylat, CAS-Nr. 80-62-6 | Evonik Performance Materials GmbH AG |
| Visiomer® HEMA 98 | Hydroxyethylmethacrylat, CAS-Nr. 868-77-9 | Evonik Performance Materials GmbH AG |
| TIB Kat® 216 | Dibutylzinndilaurat, CAS-Nr. 77-58-7 | TIB Chemicals AG, |
| Benox® L-40LV | Dibenzoylperoxid (< 50 %), CAS-Nr. 94-36-0 Alkohole C12-C15 (< 1 %), ethoxyliert, propoxyliert, CAS-Nr. 68551-13-3 | United Initiators GmbH Co KG |
| Ionol® CP | 2,6-Di-tert.-butyl-4-methylphenol, CAS-Nr. 128-37-0 | Oxiris Chemicals S.A. |

Herstellung von Mischungen aus Isocvanat-Homopolvmeren und Acrylaten (Komponente a): Exemplarisch wurde zur Herstellung der Isocyanatkomponenten in den Beispielen 1 bis 16, sowie Vergleichsbeispielen 1 bis 3 Vestanat® T1890/100 in Visiomer® MMA bzw. Visiomer® n-BMA (stabilisiert mit 200 ppm lonol CP) gelöst.

Dazu wurden in einem Dreihalbkolben T1890/100 und MMA bzw. n-BMA vorgelegt, auf 80 °C erwärmt und unter Rückflusskühlung gerührt bis sich das T1890/100 vollständig gelöst hat. Dies hat bis zu 48 Std. gedauert.

**Tab.2: Herstellung von Isocyanat-Komponenten (Komponente a) mit n-BMA**

| **Einsatzstoffe** | **Einheit** | **Vergl.-Beispiel 1** | **Beispiel 1** | **Beispiel 2** | **Beispiel 3** |
|---|---|---|---|---|---|
| Vestanat® T1890/100 | g | 80 | 70 | 60 | 50 |
| Visiomer® n-BMA | g | 20 | 30 | 40 | 50 |
| Ausgangsviskosität bei 23 °C | mPa*s | 313000 | 2268 | 122 | < 10 |
| NCO-Zahl | % | 13,8 | 11,9 | 10,3 | 8,6 |

Tab.2 zeigt, dass eine Mischung aus T1890/100 und n-BMA bei einem T1890/100-Anteil von maximal 70 Gew.-% eine Viskosität bei 23 °C von 4000 bzw. 3000 mPa*s unterschreitet. Ein höherer Anteil an n-BMA reduziert die Viskosität. Das Vergleichsbeispiel 1 (nicht erfindungsgemäß) hat hingegen eine deutliche höhere Anfangsviskosität als 4000 mPa*s.

**Tab.3: Herstellung von Isocyanat-Komponenten (Komponente a) mit MMA**

| **Einsatzstoffe** | **Einheit** | **Vergl.-Beispiel 2** | **Beispiel 4** | **Beispiel 5** | **Beispiel 6** | **Beispiel 7** | **Beispiel 8** |
|---|---|---|---|---|---|---|---|
| Vestanat® T1890/100 | g | 80 | 75 | 72 | 70 | 60 | 50 |
| Visiomer® MMA | g | 20 | 25 | 28 | 30 | 60 | 50 |
| Ausgangsviskosität bei 23 °C | mPa*s | 43942 | 3695 | 1067 | 552 | 47 | < 10 |
| NCO-Zahl | % | 13,8 | 12,7 | 12,4 | 12,1 | 10,4 | 8,6 |

Tab.3 zeigt, dass eine Mischung aus T1890/100 und MMA bei einem T1890/100-Anteil von maximal 75 Gew.-% eine Viskosität bei 23 °C von 4000 mPa*s unterschreitet. Ein höherer Anteil an MMA reduziert die Viskosität. Vergleichsbeispiel 2 (nicht erfindungsgemäß) zeigt hingegen eine deutliche höhere Anfangsviskosität als 4000 mPa*s.

### Herstellung von erfindungsgemäßen Zusammensetzungen:

Zur Herstellung wurden zunächst wie oben beschrieben T1890/100 in n-BMA gelöst.

Die Polyolkomponenten wurden hergestellt, indem Lupranol® 3504/1 und 3300 und HEMA miteinander im Speedmixer gemischt wurden. Als Katalysator und Initiator wurden zum Schluss TIB Kat® 216 und Benox® L-40LV eingerührt. Die Komponenten konnten schließlich bei Raumtemperatur gemischt werden. Zur Herstellung von Prüfkörpern wurden 5 g-Proben in Aluminiumschalen gegossen und im Trockenschrank für 80 °C/1 h + 100 °C/1 h + 140 °C/1 h + 180 °C/1 h gehärtet. Dann wurden die Schwindung und die Tg bestimmt wie in den Tab.4 und 5 dargestellt.

**Tab.4: Bestimmung der Tg und der Schwindung**

| **Einsatzstoffe** | **Einheit** | **Beispiel 9** | **Beispiel 10** | **Vergl.-Beispiel 3** | **Beispiel 11** | **Beispiel 12** | **Beispiel 13** |
|---|---|---|---|---|---|---|---|
| Vestanat®T1890/100 | g | 70 | 60 | 50 | 70 | 70 | 70 |
| Visiomer® n-BMA | g | 30 | 40 | 50 | 30 | 30 | 30 |
| Lupranol® 3504/1 | g | 15,8 | 12,1 | 8,4 | 3,7 | 7,2 | 18,8 |
| Visiomer®HEMA | g | 6 | 8 | 10 | 30 | 23,1 | 0 |
| TIB Kat® 216 | g | 0,006 | 0,006 | 0,006 | 0,007 | 0,007 | 0,006 |
| Benox® L-40LV | g | 0,7 | 1,0 | 1,2 | 1,2 | 1,1 | 0,6 |
| Komponente a) | Gew.-% | 82,10 | 83,26 | 84,46 | 74,79 | 76,75 | 84,18 |
| Komponente b) | Gew.-% | 17,90 | 16,74 | 15,54 | 25,21 | 23,25 | 15,82 |
| Komponente a1) | Gew.-% | 70 | 60 | 50 | 70 | 70 | 70 |
| Komponente a2) | Gew.-% | 30 | 40 | 50 | 30 | 30 | 30 |
| Komponente b1) | Gew.-% | 72,48 | 60,20 | 45,65 | 10,98 | 23,76 | 100,00 |
| Komponente b2) | Gew.-% | 27,52 | 39,80 | 54,35 | 89,02 | 76,24 | 0,00 |
| Summe aus a2) und b2) | Gew.-% | 29,56 | 39,97 | 50,68 | 44,88 | 40,75 | 25,25 |
| Tg | °C | 176 | 165 | 157 | 175 | 171 | 205 |
| Schwindung | % | 4,9 | 6,3 | 8 | 6,2 | 5,7 | 3,8 |

**Tab.5: Bestimmung der Tg und Schwindung**

| **Einsatzstoffe** | **Einheit** | **Beispiel 14** | **Beispiel 15** | **Beispiel 16** |
|---|---|---|---|---|
| Vestanat®T1890/100 | g | 70 | 70 | 70 |
| Visiomer® n-BMA | g | 30 | 30 | 30 |
| Lupranol® 3504 /1 | g | 12 | 4,3 | 5,5 |
| Lupranol® 3300 | g | 8 | 6,4 | 22 |
| Visiomer®HEMA | g | 6 | 23,1 | 6 |
| TIB Kat® 216 | g | 0,006 | 0,007 | 0,007 |
| Benox® L-40LV | g | 0,7 | 1,1 | 0,7 |
| Komponente a) | Gew.-% | 79,37 | 74,74 | 74,91 |
| Komponente b) | Gew.-% | 20,63 | 25,26 | 25,09 |
| Komponente a1) | Gew.-% | 70 | 70 | 70 |
| Komponente a2) | Gew.-% | 30 | 30 | 30 |
| Komponente b1) | Gew.-% | 76,92 | 31,66 | 82,09 |
| Komponente b2) | Gew.-% | 23,08 | 68,34 | 17,91 |
| Summe aus a2) und b2) | Gew.-% | 28,57 | 39,69 | 26,97 |
| Tg | °C | 160 | 165 | 140 |
| Schwindung | % | 4,6 | 6 | 4,8 |

Wie aus den Beispielen 9 bis 16 zu entnehmen ist, liegt die Schwindung der Zusammensetzungen zwischen 3,8 und 6,3 %. Dagegen sticht Vergleichsbeispiel 3 (nicht erfindungsgemäß) mit 8 % deutlich heraus. Die Glasübergangstemperaturen liegen zwischen 140 und 205 °C.

### RTM-Versuch:

Exemplarisch wurde ein RTM-Versuch mit der Formulierung aus Beispiel 13 durchgeführt.
Dazu wurden als Isocyanatkomponente 670 g einer Mischung aus Visiomer®n-BMA und Vestanat® T1890/100 im Verhältnis 7 : 3 eingesetzt. Als Polyolkomponente wurde eine Mischung aus 126 g Lupranol® 3504/1 4,02g Visiomer® HEMA und 0,04 g TIB Kat® 216 hergestellt.

Die Isocyanat- und Polyolkomponente wurden auf ca. 50 °C in einem Trockenschrank erwärmt und dann jeweils in einem Speedmixer der Fa. Hauschild für 2 min gemischt. Dann werden die Isocyanat- und die Polyolkomponente miteinander vermischt bis keine Schlieren mehr erkennbar sind. Die Mischung wird in einem Drucktopf platziert. Der Drucktopf wird anschließend verschlossen.

In der Zwischenzeit wurden in eine RTM-Form 7 Lagen einer Carbon-Faser (Biaxgelege, 300 g/m²) eingelegt und die Form verschraubt und auf 90 °C erwärmt. Der Drucktopf wird mit dem RTM-Werkzeug über einen Schlauch verbunden. Dann werden am Drucktopf 4bar Druck angelegt, wodurch die Mischung aus dem Druck im die RTM-Apparatur überführt wird. Die Infusionszeit dauert etwa 1 min. Dann tritt die Flüssigkeit durch einen weiteren Schlauch aus der RTM-Apparatur aus. Die Schläuche werden abgetrennt und der Drucktopf gereinigt. Die RTM-Apparatur bleibt für 15 min verschlossen. Anschließend werden die Verschraubungen gelöst, und die hergestellt Composite-Platte kann entnommen werden. Sie ist vollständig durchtränkt.

## Patentansprüche

1. Zusammensetzung, mindestens enthaltend
a) 70 bis 90 Gew.-%, bevorzugt 74 bis 85 Gew.-% (bezogen auf die Gesamtzusammensetzung) einer NCO-Gruppen-haltigen reaktiven Komponente, umfassend
a1) 60 bis 75 Gew.-%, bevorzugt 65 bis 72 Gew.-% (bezogen auf die Gesamtzusammensetzung der Komponente a)) mindestens einer Verbindung, die freie Isocyanatgruppen enthält;
a2) 25 bis 40 Gew.-%, bevorzugt 28 bis 35 Gew.-% (bezogen auf die Gesamtzusammensetzung der Komponente a)) mindestens einer reaktiven Verbindung, die mindestens eine Doppelbindung enthält, bevorzugt Acrylate und Methacrylate;
und
b) 10 bis 30 Gew.-%, bevorzugt 15 bis 26 Gew.-% (bezogen auf die Gesamtzusammensetzung) einer mit NCO-Gruppen reaktiven Komponente, umfassend
b1) 10 bis 100 Gew.-%, bevorzugt 20 bis 100 Gew.-% (bezogen auf die Gesamtzusammensetzung der Komponente b)) mindestens einer Verbindung, die mindestens eine gegenüber Isocyanat-Gruppen reaktive funktionelle Gruppe aufweist;
b2) 0 bis 90%, bevorzugt 0 bis 80 Gew.-% (bezogen auf die Gesamtzusammensetzung der Komponente b)) mindestens einer Verbindung, die mindestens eine Doppelbindung und mindestens eine gegenüber Isocyanat-Gruppen reaktive funktionelle Gruppen enthält.

2. Zusammensetzung nach Anspruch 1, wobei die Zusammensetzung zusätzlich mindestens einen Polyurethan-Katalysator als Komponente c) enthält.

3. Zusammensetzung nach Anspruch 1 oder 2, wobei die Zusammensetzung zusätzlich mindestens einen Initiator als Komponente d) enthält.

4. Zusammensetzung nach einem der Ansprüche 1 bis 3, wobei die Komponenten a2) und b2) in Summe weniger als 50 Gew.-%, bevorzugt weniger als 40 Gew.-%, besonders bevorzugt maximal 30 Gew.-% der Gesamtzusammensetzung ausmachen.

5. Zusammensetzung nach einem der Ansprüche 1 bis 4, wobei die Schwindung der Zusammensetzung nach der Härtung weniger als 7 %, vorzugsweise weniger als 6%, besonders bevorzugt weniger als 5% beträgt.

6. Zusammensetzung nach einem der Ansprüche 1 bis 5, wobei die Glasübergangstemperatur (Tg) der Zusammensetzung nach der Härtung oberhalb von 140 °C, vorzugsweise oberhalb von 160 °C liegt.

7. Zusammensetzung nach einem der Ansprüche 1 bis 6, wobei als Verbindungen a1) aromatische, aliphatische und/oder cycloaliphatische Di- und/oder Polyisocyanate oder Mischungen daraus eingesetzt werden.

8. Zusammensetzung nach einem der Ansprüche 1 bis 7, wobei als Verbindungen b1) Verbindungen, die eine, bevorzugt zwei oder mehr OH-, NH₂-, NH-, SH- oder CH-acide Gruppen, bevorzugt Verbindungen, die eine, bevorzugt zwei oder mehr OH-, NH₂- und SH-Gruppen und besonders bevorzugt Verbindungen, die eine, bevorzugt zwei oder mehr OH-Gruppen aufweisen.

9. Zusammensetzung nach Anspruch 8, wobei als Verbindung b1) Diole und/oder Polyole, Diole und Polyole, die weitere funktionelle Gruppen aufweisen, OH-Gruppen haltige (Meth-)Acrylate und Poly(meth)acrylate oder Epoxidgruppen haltige Verbindungen, die zusätzlich mindestens eine OH-Gruppe aufweisen, eingesetzt werden.

10. Zusammensetzung nach Anspruch 9, wobei als Verbindung b1) lineare oder schwach verzweigte hydroxylgruppenhaltigen Polyester (Polyesterpolyole), Polycarbonate, Polycaprolactone, Polyether (Polyetherpolyole), Polythioether, Polyesteramide, Polyacrylate, Polyvinylalkohole, Polyurethane, Polyacetale oder Mischungen daraus eingesetzt werden.

11. Zusammensetzung nach Anspruch 9, wobei als Verbindung b1) Polyesterpolyole, Polyetherpolyole, Polyacrylate, Polyurethane, Polyvinylalkohole, Polycarbonate oder Mischungen daraus eingesetzt werden.

12. Zusammensetzung nach einem der Ansprüche 1 bis 11, wobei die Zusammensetzung eine Viskosität in gemischter Form von 30 bis 2000 mPa*s, vorzugsweise von 100 bis 1500 mPa*s bei einer Temperatur zwischen 23 und 60 °C aufweist.

13. Verfahren zur Herstellung von Composite-Formteils, wobei das Verfahren die folgenden Schritte umfasst:
a) Herstellung der Zusammensetzung nach einem der Ansprüche 1 bis XX;
b) Direkte Imprägnierung eines faserförmigen Trägermaterials mit der in Schritt a) hergestellten Zusammensetzung;
c) Formgebung des mit der Zusammensetzung imprägnierten faserförmigen Trägers zu einem Formteil (nicht ausgehärtet);
d) Aushärten der Zusammensetzung zur Herstellung des fertigen Composite-Formteils.

14. Verfahren nach Anspruch 12, wobei die faserförmige Trägermaterialien Glas, Kohlenstoff, Kunststoffen, wie Polyamid (Aramid) oder Polyester, Naturfasern, oder mineralischen Fasermaterialien, wie Basaltfasern oder keramische Fasern (Fasern auf Basis von Aluminiumoxiden und/oder Siliciumoxiden) bestehen, wobei die verschiedenen Trägermaterialien aus einzelnen der genannten Fasertypen, aus Mischungen von verschiedenen der genannten Fasertypen, oder aus mehreren Lagen verschiedener der genannten Fasertypen bestehen können.

15. Verwendung der nach dem Verfahren nach Anspruch 13 oder 14 hergestellten Composite-Formteile im Boots- und Schiffbau, in der Luft- und Raumfahrtechnik, im Automobilbau, für Zweiräder, bevorzugt Motorräder und Fahrräder, in den Bereichen Automotive, Construction, Medizintechnik, Sport, Elektro- und Elektronik-Industrie und Energieerzeugungsanlagen, z. B. für Rotorblätter bei Windkraftanlagen.
